(19) Europäisches Patentamt
European Patent Office
Office européen des brevets

(11) **EP 2 613 960 B1**

(12) **FASCICULE DE BREVET EUROPEEN**

(45) Date de publication et mention
de la délivrance du brevet:
**25.01.2017 Bulletin 2017/04**

(51) Int Cl.:
**B60L 11/18** *(2006.01)* **H02J 7/02** *(2016.01)*
**H02J 7/06** *(2006.01)* **H02M 7/217** *(2006.01)*

(21) Numéro de dépôt: **11755397.4**

(22) Date de dépôt: **03.08.2011**

(86) Numéro de dépôt international:
**PCT/FR2011/051866**

(87) Numéro de publication internationale:
**WO 2012/032241 (15.03.2012 Gazette 2012/11)**

(54) **DISPOSITIF DE RECHARGE POUR BATTERIE AUTOMOBILE ET PROCEDE DE GESTION DU DISPOSITIF**

VORRICHTUNG ZUM AUFLADEN EINER AUTOBATTERIE UND VERFAHREN ZUR HANDHABUNG DER VORRICHTUNG

DEVICE FOR RECHARGING AN AUTOMOBILE BATTERY AND METHOD FOR MANAGING THE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.09.2010 FR 1057103**

(43) Date de publication de la demande:
**17.07.2013 Bulletin 2013/29**

(73) Titulaire: **Renault s.a.s**
**92100 Boulogne-Billancourt (FR)**

(72) Inventeurs:
• **GATI, Mehdi**
  **F-92330 Sceaux (FR)**
• **KETFI-CHERIF, Ahmed**
  **F-78990 Elancourt (FR)**

(56) Documents cités:
**EP-A1- 1 914 870      US-A- 6 043 999**
**US-A1- 2006 072 352      US-A1- 2008 030 178**

**US-B1- 7 268 526**

• **SHIBASHIS BHOWMIK ET AL: "Sensorless Current Control for Active Rectifiers", IEEE TRANSACTIONS ON INDUSTRY APPLICATIONS, IEEE SERVICE CENTER, PISCATAWAY, NJ, US, vol. 33, no. 3, 1 juin 1997 (1997-06-01), XP011022191, ISSN: 0093-9994**
• **LINDGREN M ET AL: "Control of a voltage-source converter connected to the grid through an LCL-filter-application to active filtering", POWER ELECTRONICS SPECIALISTS CONFERENCE, 1998. PESC 98 RECORD. 29TH A NNUAL IEEE FUKUOKA, JAPAN 17-22 MAY 1998, NEW YORK, NY, USA,IEEE, US, vol. 1, 17 mai 1998 (1998-05-17), pages 229-235, XP010294951, DOI: DOI:10.1109/PESC.1998.701904 ISBN: 978-0-7803-4489-1**
• **JOERG DANNEHL ET AL: "Limitations of Voltage-Oriented PI Current Control of Grid-Connected PWM Rectifiers With Filters", IEEE TRANSACTIONS ON INDUSTRIAL ELECTRONICS, IEEE SERVICE CENTER, PISCATAWAY, NJ, USA, vol. 56, no. 2, 1 février 2009 (2009-02-01), pages 380-388, XP011237609, ISSN: 0278-0046, DOI: DOI:10.1109/TIE.2008.2008774**

**EP 2 613 960 B1**

**Description**

L'invention se situe dans le domaine des dispositifs de charge rapide, de batteries haute tension à partir d'une prise d'un réseau triphasé et en particulier à un dispositif de recharge rapide pour batterie de véhicule automobile.

Dans de tels systèmes de recharge, on amène la puissance électrique du réseau à la batterie successivement au travers de deux convertisseurs : un abaisseur de tension (« buck ») et un élévateur de tension (« boost »). Ces deux convertisseurs permettent respectivement d'abaisser et d'élever le rapport de tensions entre leurs bornes de sortie et leurs bornes d'entrée, en ouvrant et en fermant successivement une série d'interrupteurs, à une fréquence qui est commandable en fonction du courant de sortie, et/ou de la tension de sortie souhaités.

La demande de brevet publiée US2006072352 divulgue un système de conversion de puissance électrique triphasé comprenant un filtre d'entrée, un redresseur (T1-T6), et un convertisseur élévateur abaisseur

Le hachage du courant tiré du réseau induit des composantes à hautes fréquences dans le courant prélevé, c'est-à-dire des harmoniques d'ordre supérieur au fondamental du réseau de distribution qui est classiquement à 50 Hz.

Le distributeur d'électricité imposant une norme sur les harmoniques du courant prélevé, un tel système de recharge comporte également un filtre de type RLC (Résistif-Inductif-Capacitif) à l'entrée de l'abaisseur de tension. Ce filtre induit un déphasage entre le courant et la tension prélevée sur le réseau. Ce déphasage implique une puissance réactive transitant par le réseau, mais non prélevée par l'utilisateur, et que l'on cherche également à minimiser.

L'objectif de l'invention est de proposer un dispositif de régulation de l'abaisseur de tension et de l'élévateur de tension d'un tel dispositif de recharge, qui permette, malgré la présence d'un filtre RLC en entrée du dispositif, de garder un déphasage réduit entre le courant et la tension prélevée sur le réseau.

Un autre but de l'invention est de proposer un dispositif de recharge embarqué pour véhicule automobile, adapté pour pouvoir être connecté à un réseau triphasé extérieur, et intégrant dans son circuit le bobinage d'une machine électrique du véhicule.

A cette fin, un dispositif de charge rapide pour batterie, notamment pour batterie de véhicule automobile, comprend un étage de filtrage de type résistif-inductif-capacitif destiné à être raccordé à un réseau triphasé, un étage abaisseur de tension, et un étage élévateur de tension, destiné à être raccordé à la batterie, ainsi qu'une bobine d'induction interposée entre l'étage abaisseur et l'étage élévateur de tension. Le dispositif comprend également une unité de régulation apte à imposer des rapports cycliques de hachage à l'étage abaisseur de tension et à l'étage élévateur de tension. L'unité de régulation comprend des moyens de compensation du déphasage induit par l'étage de filtrage entre les courants et les tensions prélevés sur chaque phase du réseau triphasé, et comprend également des moyens pour maintenir la valeur de l'amplitude de courant traversant la bobine au dessus d'un seuil prédéfini non nul.

Avantageusement, l'unité de régulation comprend en outre des moyens pour asservir le courant entrant dans la batterie à une valeur consigne de courant batterie.

De manière préférentielle, le dispositif comprend des moyens de mesure des intensités de courants entrants dans le dispositif par les phases du réseau triphasé, des moyens de mesure de l'intensité du courant traversant la bobine, et l'unité de régulation comprend au moins deux boucles de régulation utilisant les valeurs mesurées d'intensité pour délivrer trois valeurs utilisées comme consignes de rapports de hachage cyclique de l'étage abaisseur de tension.

L'unité de régulation peut comprendre une troisième boucle de régulation, délivrant une valeur utilisée comme consigne de rapport cyclique de hachage de l'étage élévateur de tension.

Selon un mode de réalisation préféré, l'unité de régulation comprend des moyens pour déterminer trois tensions d'entrée sinusoïdales aux points de connexion du dispositif au réseau triphasé, et au moins une première boucle de régulation fait intervenir la pulsation des tensions d'entrées du dispositif.

Avantageusement, la première boucle de régulation est configurée pour asservir à zéro une composante obtenue comme une combinaison linéaire des valeurs des intensités de courants d'entrée, les coefficients de la combinaison linéaire étant des fonctions trigonométriques de $\omega t$, où $\omega$ est la pulsation des tensions d'entrées du dispositif, et t est une mesure du temps.

De manière préférentielle, l'unité de régulation comprend un opérateur apte à effectuer trois combinaisons linéaires de deux valeurs issues de deux des boucles de régulation, les coefficients de chacune des trois combinaisons linéaires étant des fonctions trigonométriques de $\omega t$.

L'unité de régulation peut par exemple être configurée pour effectuer un premier changement de repère sur un vecteur ayant pour composante les courants d'entrée du dispositif, en calculant une, deux ou trois composantes d'intensité de courant entrantes, dans un repère tournant par rapport au repère initial à une vitesse de rotation angulaire $\omega$ correspondant à la pulsation $\omega$ des tensions aux points de connexion du système au réseau triphasé. L'unité de régulation peut être configurée pour utiliser ensuite l'écart à une valeur de consigne, d'une des composantes calculées dans la nouvelle base, comme valeur d'entrée d'une parmi deux boucle de régulation délivrant respectivement deux variables utilisées ensuite par l'unité de régulation pour calculer, moyennant un autre changement de repère tournant, trois valeurs de consigne des rapports cycliques de hachage de l'étage abaisseur de tension.

Le dispositif peut comprendre un moyen de mesure de l'intensité du courant traversant la machine électrique.

L'unité de régulation peut alors être configurée pour comparer respectivement, soit une des composantes dans la nouvelle base et l'intensité de courant traversant la machine électrique, soit deux des composantes calculées dans la nouvelle base, en calculant pour chaque valeur son écart à zéro ou son écart à une valeur de consigne, puis pour utiliser les deux écarts obtenus comme entrées de deux régulateurs *PID* délivrant respectivement deux valeurs de consigne d'intensité de courant. La valeur de consigne peut être une fonction constante, ou peut être une fonction consigne élaborée en fonction des besoins en énergie de la batterie.

L'unité de régulation peut comporter un opérateur apte à appliquer au vecteur $(If_d, If_q, 0)$ défini par les deux valeurs de consigne d'intensité de courant $If_d$ et $Ifq$ délivrées par les deux régulateurs PID, une matrice de changement de repère inverse du premier changement de repère. Elle peut comporter des opérateurs aptes à diviser les trois intensités obtenues suite à ce deuxième changement de repère, par l'intensité mesurée traversant la bobine d'induction, et un ou plusieurs modules pilotes aptes à utiliser les trois résultats comme valeurs de consigne des rapports cycliques de hachage de l'étage abaisseur de tension.

L'unité de régulation peut par exemple être configurée pour asservir dans le nouveau repère l'une des composantes d'intensité de courant entrant à zéro, et asservir simultanément une autre des composantes à une valeur de consigne de référence, afin de calculer trois consignes de rapports cycliques de hachage de l'étage abaisseur de tension.

Elle peut alors comporter en parallèle une boucle de régulation, apte à délivrer une valeur de consigne du rapport cyclique de hachage de l'étage élévateur de tension, la boucle ayant pour valeur d'entrée l'écart entre une deuxième valeur consigne et le courant mesuré traversant la machine bobine d'induction.

Selon un autre mode de réalisation, l'unité de régulation peut comporter une première boucle de régulation apte à asservir dans le nouveau repère l'une des composantes d'intensité de courant entrant à zéro, et une seconde boucle de régulation apte à asservir le courant mesuré traversant la bobine d'induction à une valeur consigne afin de calculer trois consignes de rapports cycliques de hachage de l'étage abaisseur de tension.

Elle peut alors comporter en parallèle une boucle de régulation apte à délivrer une valeur de consigne de rapport cyclique de hachage de l'étage élévateur de tension, à partir du courant mesuré aux bornes de la batterie, de la consigne de courant d'alimentation de la batterie, et du courant mesuré traversant la bobine d'induction.

Selon un autre aspect, un procédé de régulation d'un dispositif de charge rapide pour batterie à partir d'un courant triphasé, comprend une étape de pilotage des rapports cycliques de hachage d'un étage abaisseur de tension, au cours de laquelle on compense, en combinant les résultats de deux boucles de régulation, un déphasage induit par un étage de filtrage de type résistif-capacitif-inductif, entre les intensités de courants d'entrée du dispositif et les tensions d'entrée du dispositif.

Selon un mode de mise en oeuvre préféré du procédé, on filtre les tensions d'entrée du dispositif pour pouvoir les modéliser par trois composantes d'un vecteur tournant dans un plan avec une pulsation $\omega$, puis on applique une boucle de régulation pour annuler la composante dans ce plan, perpendiculaire au vecteur modélisé des tensions d'entrée, du vecteur $\vec{Ie}$ ayant pour composantes trois intensités mesurées d'entrée du dispositif.

Dans un tel procédé, on asservit à zéro une combinaison linéaire de trois courants mesurés en entrée du dispositif, les coefficients de la combinaison linéaire étant des fonctions trigonométriques de $\omega t$, où $\omega$ est une fréquence de pulsation des tensions d'entrées du dispositif, et t est une mesure du temps.

D'autres buts, caractéristiques et avantages de l'invention apparaîtront à la lecture de la description détaillée d'un mode de réalisation de l'invention, donnée à titre nullement limitatif, et des dessins annexés sur lesquels :

- la figure 1 illustre un dispositif de recharge selon l'invention,
- les figures 2a et 2b illustre deux sous-ensembles de régulation d'un dispositif de recharge selon l'invention,
- les figures 3a et 3b illustrent deux autres sous-ensembles de régulation d'un dispositif de recharge selon un autre mode de réalisation de l'invention.

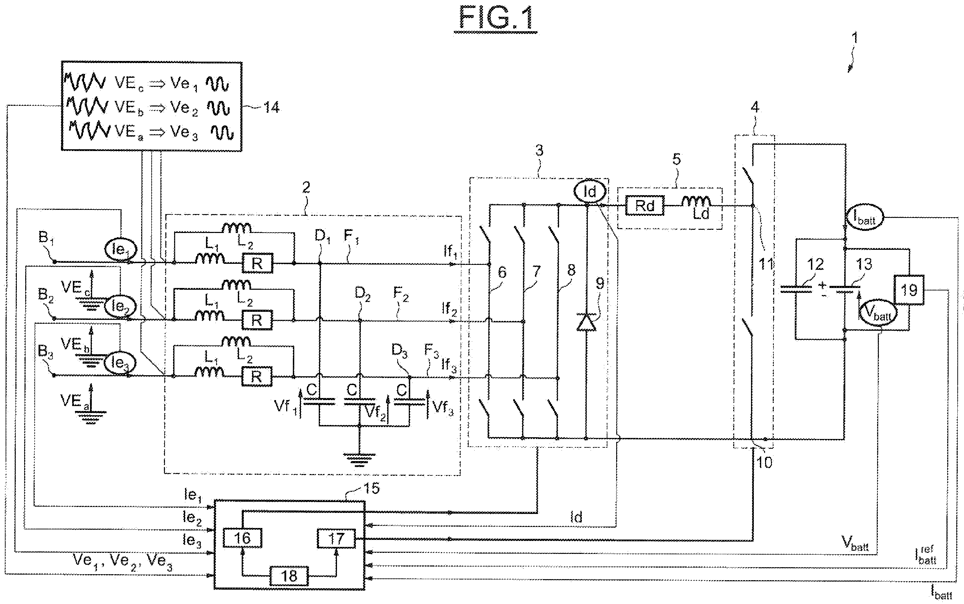

Tel qu'illustré sur la figure 1, le dispositif de recharge d'une batterie 13 comprend trois bornes $B_1$, $B_2$, $B_3$ permettant de relier le dispositif 1 à un réseau triphasé. Ces trois bornes $B_1$, $B_2$, $B_3$ sont reliées respectivement à trois entrées $D_1$, $D_2$, $D_3$ d'un abaisseur de tension 3, au travers à chaque fois d'une branche de filtrage comprenant deux branches parallèles, portant l'une une inductance de valeur $L_2$ et l'autre portant en série une inductance de valeur $L_1$ et une résistance de valeur R.

Chaque borne $D_1$, $D_2$, $D_3$ d'entrée de l'abaisseur de tension est en outre reliée à la masse au travers d'un condensateur de capacité C. L'ensemble des résistances de valeurs R, des inductances de valeurs $L_1$ ou $L_2$, et l'ensemble des trois capacités de valeurs C constituent un filtre de type RLC à l'entrée de l'abaisseur de tension 3.

L'abaisseur de tension 3 comprend trois branches parallèles 6, 7 et 8 portant chacune deux interrupteurs commandés par une unité de régulation 15. Chaque entrée $D_1$, $D_2$ ou $D_3$ de l'abaisseur de tension est connectée, respectivement par une branche $F_1$, $F_2$, $F_3$, à un point de connexion situé entre deux interrupteurs d'une même branche, respectivement 6, 7 et 8.

L'abaisseur de tension 3 comprend également une branche portant une diode 9 passante dans un seul sens, et connectée en parallèle aux branches 6, 7 et 8. Les extrémités communes des branches 6, 7, 8 et de la branche portant la diode 9, constituent deux bornes de sortie de l'abaisseur de tension 3. L'une de ces bornes, située en amont de la diode de la branche 9 dans le sens passant de cette dernière, est reliée à la borne « - » de la batterie 13 ainsi qu'à une première entrée 10 d'un élévateur de tension 4. L'autre de ces bornes, située en aval de la diode de la branche 9 dans le sens passant de cette dernière est connectée à une première borne d'une machine électrique 5, dont l'autre borne est connectée à une seconde entrée de l'élévateur de tension 4.

Le descriptif du paragraphe précédent correspond à un premier mode de réalisation simplifié de l'abaisseur de tension. Dans ce mode de réalisation, les trois branches de l'abaisseur de tension sont pilotées de manière identique. D'autres mode de réalisation sont envisageables, tel que par exemple les modes de réalisation décrits dans la demande de brevet FR 2 943 188.

La branche comportant la diode 9 est optionnelle, et l'on ne s'écarte pas de l'invention en la supprimant.

L'élévateur de tension 4 comprend deux interrupteurs pilotables par l'unité de régulation 15, situés sur une branche reliant sa première entrée 10 et la borne « + » de la batterie. La seconde entrée 11 de l'élévateur de tension 4, à laquelle est connectée la machine électrique 5, est connectée entre les deux interrupteurs.

Une machine électrique 5 assimilable à une résistance de valeur Rd disposée en série avec une bobine d'inductance Ld est connectée entre la borne de sortie de l'abaisseur de tension 3, placée en aval de la diode 9, et la seconde entrée de l'élévateur de tension 4. On ne sort pas du cadre de l'invention si on remplace la machine électrique 5 par une bobine d'inductance non résistive, ou si l'on branche en série avec la machine électrique 5 une bobine d'induction supplémentaire.

Aux bornes de la batterie 13, est connecté un condensateur 12 destiné à maintenir relativement stable la tension aux bornes de la batterie 13, ainsi qu'un module 19 de suivi de charge de la batterie, apte à délivrer une valeur de consigne $I_{batt}^{ref}$ traduisant, en fonction du niveau de charge de la batterie, l'intensité optimale de courant à faire entrer par la borne « + » de la batterie. Le module 19 de suivi de charge transmet la valeur de consigne $I_{batt}^{ref}$ à l'unité de régulation 15 par une connexion dédiée.

Des moyens de mesure, intégrés ou non au module 19, transmettent par ailleurs à l'unité de régulation 15 une valeur $I_{batt}$ traduisant une intensité de courant mesurée entrant effectivement dans la batterie, et une valeur $V_{batt}$ traduisant la tension entre la borne « - » et la borne « + » de la batterie 13.

D'autres modules de mesure d'intensité de courant permettent de mesurer et de transmettre à l'unité de régulation 15, la valeur Id de courant traversant la machine électrique 5, les valeurs $Ie_1$, $Ie_2$ et $Ie_3$ d'intensité de courant entrant par les bornes $B_1$, $B_2$ et $B_3$ du circuit triphasé dans le filtre 2. Un module de normalisation 14 est connecté aux bornes $B_1$, $B_2$ et $B_3$ de connexion du dispositif de charge 1, et transmet à l'unité de régulation 15, trois valeurs $Ve_1$, $Ve_2$, $Ve_3$ correspondant à des valeurs filtrées sinusoïdales de tensions, ainsi qu'un triplet (c, a, b) définissant l'ordre dans lequel sont numérotées les bornes $B_1$, $B_2$, $B_3$ par rapport à leurs positions physiques a, b, c.

Le pilotage de l'élévateur de tension 4 se fait suivant des méthodes connues à partir d'une consigne $a_s$ définie par $a_s = I_{batt}/Id$ élaborée par un module de contrôle 17 de l'unité de régulation 15. Le pilotage de l'abaisseur de tension 3 se fait suivant des méthodes connues à partir d'un rapport cyclique de hachage défini par un triplet $(a_1, a_2, a_3) = If/Id = (If_1/Id, If_2/Id, If_3/Id)$, et élaboré par un module de contrôle 16 de l'unité de régulation 15.

L'unité de régulation 15 comprend pour cela deux modules pilotes (non représentés), apte, pour le premier, à imposer un motif temporel d'ouverture et de fermeture à chacun des interrupteurs de l'abaisseur de tension 3, de manière à obtenir les rapports cycliques de hachage $a_1$, $a_2$ et $a_3$, et apte, pour le second, à imposer un motif temporel d'ouverture et de fermeture à chacun des interrupteurs de l'élévateur de tension 4, de manière à obtenir le rapport cyclique $a_s$.

Les interrupteurs sont de préférence des transistors permettant une commutation rapide, par exemple les transistors de type IGBT (« Insulated Gate Bipolar Transistor »).

L'unité de régulation 15 comprend également un module guide de référence 18, apte à délivrer aux modules de contrôle 16 et/ou 17 des valeurs de consigne de courant souhaitées, soit en entrée ($Ie_d^{ref}$), soit à la sortie ($Id^{ref}$) de l'abaisseur de tension 3.

L'unité de régulation 15 reçoit en entrée les valeurs filtrées $Ve_1$, $Ve_2$, $Ve_3$ de tension aux bornes d'entrée du dispositif, l'ordre de numérotation (c, b, a) des bornes, les valeurs de courant mesurés $Ie_1$, $Ie_2$, $Ie_3$ aux bornes d'entrée ainsi numérotées $B_1$, $B_2$, $B_3$, la valeur Id de courant mesurée au travers de la machine électrique 5, la valeur $I_{batt}$ de courant arrivant à la borne « + » de la batterie 13, la valeur de consigne $I_{batt}^{ref}$ délivrée par le module de suivi de charge 19. Certaines de ces valeurs sont utilisées par le module guide de référence 18 pour élaborer une consigne d'intensité intermédiaire. Le module guide de référence utilise notamment les valeurs $I_{batt}^{ref}$ de consigne de courant arrivant à la batterie, l'amplitude Vm des signaux de tension aux bornes d'entrée du dispositif, la tension $V_{batt}$ aux bornes de la batterie 13, et la tension $I_{batt}$ arrivant à la borne « + » de la batterie 13.

La consigne d'intensité de courant élaborée par le module guide 18 est transmise au module de contrôle 16 qui l'utilise, conjointement aux valeurs $Ie_1$, $Ie_2$, $Ie_3$ de courant entrant aux bornes du réseau triphasé, pour générer au moyen d'une double boucle de régulation, trois valeurs de rapport cyclique de hachage $a_1$, $a_2$, $a_3$ permettant de piloter les cycles d'ouverture et fermeture des interrupteurs de l'abaisseur de tension 3.

Le module de contrôle 17, soit à partir de la consigne d'intensité $I_{batt}^{ref}$ de courant entrant dans la batterie, soit à partir d'une consigne de courant généré par le module guide de référence 18, opère une boucle de régulation délivrant une valeur de pilotage $a_s$ représentant le rapport cyclique de hachage de l'élévateur de tension 4.

A titre indicatif, les valeurs caractéristiques des éléments électriques du dispositif de charge 1 se trouvent dans les plages de valeurs suivantes :

- les capacités C du filtre 2 représentent quelques centaines de $\mu F$, par exemple entre 100 et 500 $\mu F$ chacune,
- la capacité 12 disposée aux bornes de la batterie 13 afin de stabiliser la tension à ses bornes, est de l'ordre du mF, par exemple entre 1 et 10 mF,
- les résistances de valeurs R du circuit de filtrage 2 sont de l'ordre de l'ohm, par exemple entre 1 et 10 ohms,
- la résistance Rd du rotor de la machine électrique Me est de l'ordre de quelques dizaines de $m\Omega$, par exemple entre $0,01\Omega$ et $0,1\Omega$,
- les inductances $L_1$, $L_2$, Ld correspondant respectivement aux inductances du filtre 2 et aux bobinages de la machine électrique 5, ont des valeurs de l'ordre de quelques dizaines de $\mu H$, par exemple des valeurs comprises entre 10 et 100 $\mu H$.

Voici maintenant les grandes lignes du raisonnement permettant d'aboutir au mode de régulation que l'invention propose d'appliquer, pour le fonctionnement des modules 16, 17 et 18 de l'unité de régulation 15.

L'ordre dans lequel sont numérotées les bornes $B_1$, $B_2$ et $B_3$ est défini à chaque branchement du dispositif sur un réseau triphasé par le module de normalisation 14. Le module de normalisation 14 reçoit en entrée les trois tensions $VE_a$, $VE_b$, $VE_c$ entre chaque borne d'entrée du dispositif et une phase correspondant à la phase neutre du réseau triphasé. Le module de normalisation 14 effectue alors, suivant des techniques connues, par exemple suivant des techniques de type « boucle à verrouillage de phase » ou « PLL » ("Phase Locked Loop"), un filtrage de chacun des signaux d'entrée de manière à obtenir un signal sinusoïdal ayant la même fréquence que l'harmonique principale du signal mesuré.

Le module de normalisation détermine alors l'ordre dans lequel doivent être numérotés les trois signaux de manière à avoir un premier signal sous la forme $V_m \sin(\omega t)$, un second signal $Ve_2$ égal au signal $Ve_1$ déphasé de $-2\pi/3$, et un signal $Ve_3$ égal au signal $Ve_1$ déphasé de $+2\pi/3$.

Le module de normalisation 14 envoie ensuite à l'unité de régulation 15 les caractéristiques de courant permettant à l'unité de régulation 15 de reconstruire un vecteur de tension

$$\vec{V} = (Ve_1, \ Ve_2, \ Ve_3) = V_m \ (\sin(\omega t), \ \sin(\omega t - 2\pi/3), \ \sin(\omega t + 2\pi/3)),$$ c'est-à-dire l'amplitude Vm, la pulsation de la tension, et l'origine des temps choisies pour que le premier terme $Ve_1$ ait une phase nulle.

Le module de normalisation 14 renvoie également l'ordre dans lequel doivent être numérotées les trois bornes $B_1$, $B_2$, $B_3$ pour que les trois termes du vecteur présentent entre eux le déphasage spécifié plus haut.

L'unité de régulation 15 reçoit de trois capteurs d'intensité de courant, trois valeurs mesurées à chacune des bornes $B_1$, $B_2$, $B_3$ représentant trois courants $Ie_1$, $Ie_2$, les entrant dans le dispositif. L'unité de régulation 15 ordonne les trois valeurs $Ie_1$, $Ie_2$ et $Ie_3$ pour obtenir un vecteur courant ($Ie_1$, $Ie_2$, $Ie_3$) de manière à ce que l'intensité $Ie_1$ soit l'intensité traversant la borne $B_1$ correspondant à la tension filtrée $Ve_1$, que l'intensité $Ie_2$ soit le courant traversant la borne $B_2$ dont la tension filtrée correspond à $Ve_2$ et que l'intensité $Ie_3$ soit le courant traversant la borne $B_3$ dont la tension filtrée correspond à $Ve_3$.

On ne sort pas du cadre de l'invention si l'ordre attribué aux trois valeurs de tension filtrées est différent de celui défini ci-dessus. Cependant, les équations qui suivent devront être adaptées en conséquence, notamment pour l'expression de la matrice de changement de repère $T(\omega t)$ définie plus loin.

Les indices 1, 2, 3 correspondant à une renumérotation des phases du réseau triphasé peuvent correspondre, dans l'ordre, aux indices a, b, c, ou peuvent être une permutation de ceux-ci.

Dans la suite du raisonnement, les identifications des bornes $B_1$, $B_2$, $B_3$ de connexion du dispositif 1 au réseau triphasé, ainsi que la numérotation qui en découle, pour les points de connexion $D_1$, $D_2$, $D_3$, les branches $F_1$, $F_2$, $F_3$, les tensions $Vf_1$, $Vf_2$, $Vf_3$, les intensités de courant $Ie_1$, $Ie_2$, $Ie_3$, $If_1$, $If_2$, $If_3$, suppose que les bornes $B_1$, $B_2$, $B_3$ ont été numérotées par le module de normalisation 14 suivant le principe ci-dessus.

Le module de normalisation 14 envoie les trois valeurs modélisées $Ve_1$, $Ve_2$, $Ve_3$ de tension, à l'unité de régulation 15, qui doit par la suite élaborer des valeurs de consigne de rapport cyclique de hachage pour l'abaisseur de tension 3 et pour l'élévateur de tension 4, permettant de satisfaire à trois objectifs :

- minimiser le déphasage entre les courants $Ie_1$, $Ie_2$, $Ie_3$ mesurés au travers des bornes $B_1$, $B_2$, $B_3$ de connexion au réseau triphasé, et les trois valeurs de tension modélisées $Ve_1$, $Ve_2$, $Ve_3$ aux bornes correspondantes du dispositif,
- obtenir un courant mesuré entrant $I_{batt}$ par la borne « + » de la batterie 13, correspondant aux besoins d'alimentation de la batterie, ces besoins étant déterminés par le module de suivi de charge 19 et délivrés en tant que fonction

$I_{batt}^{ref}$ à l'unité de régulation 15,
- éviter une annulation du courant Id transitant au travers de la bobine d'induction Ld de la machine électrique 5, afin de ne pas générer d'harmoniques indésirables au niveau du courant prélevé sur le réseau.

On considère pour cela un vecteur tension $\vec{Ve}$ ayant pour coordonnées dans une base initiale $Ve_1$, $Ve_2$ et $Ve_3$, c'est-à-dire $\vec{Ve} = (Ve_1, Ve_2, Ve_3)$ dans cette première base.

On considère, dans la même base (on pourrait indifféremment dire "dans le même repère"), un vecteur intensité de courant entrant dans le dispositif 1 : $\vec{Ie} = (Ie_1, Ie_2, Ie_3)$, et un vecteur intensité de sortie du filtre 2 : $\vec{If} = (If_1, If_2, If_3)$, ainsi qu'un vecteur de tension aux bornes des capacités C de filtrage du filtre 2 : $\vec{Vf} = (Vf_1, Vf_2, Vf_3)$.

Par la suite nous notons « s » l'opérateur de dérivation par rapport au temps « t », soit $\dfrac{d}{dt} = s$, ce qui peut aussi s'exprimer, en notation complexe et pour des courants sinusoïdaux de pulsation ω, s = jω.

Les relations entre courant et tension de chacune des branches du filtre 2 s'écrivent :

$$\vec{Ve} = L_2 \cdot s \cdot (L_1 \cdot s + R)/(L_2 \cdot s + L_1 \cdot s + R) \cdot \vec{Ie} + \vec{Vf}$$

et

$$C \cdot s \cdot \vec{Vf} = \vec{Ie} - \vec{If}$$

ou encore :

$$[(L_1 + L_2) \cdot s + R] \cdot (\vec{Ve} - \vec{Vf}) = (L_1 \cdot L_2 \cdot s^2 + R \cdot L_2 \cdot s) \cdot \vec{Ie} \qquad \text{équation (1)}$$

$$\text{et} \qquad C \cdot s \cdot \vec{Vf} = Ie - \vec{If} \qquad \text{équation (2)}$$

l'équation de la branche portant la machine électrique 5 s'écrit :

$$Rd \cdot Id + Ld \cdot s \cdot Id = \vec{a} \cdot \vec{Vf} - a_s \cdot V_{batt},$$

où $\vec{a} = (a_1, a_2, a_3)$ vecteur défini dans la base initiale par les rapports cycliques de hachage (PWM) de l'abaisseur de tension 3.

Ce qui peut encore s'écrire :

$$Rd \cdot Id + Ld \cdot s \cdot Id = (\vec{If} \cdot \vec{Vf} - I_{batt} \cdot V_{batt})/Id$$

ou encore :

$$Rd \cdot Id^2 + Ld/2 \cdot s \cdot (Id^2) = \vec{If} \cdot \vec{Vf} - I_{batt} \cdot V_{batt}$$

On définit une matrice de changement de variable T(ωt) (que l'on peut indifféremment appeler matrice de changement de base ou matrice de changement de repère) à partir du vecteur $\vec{Ve}$ sous la forme :

$$T(\omega t) = \frac{2}{3}\begin{bmatrix} \sin(\omega t) & \sin\left(\omega t - \frac{2\pi}{3}\right) & \sin\left(\omega t + \frac{2}{3}\right) \\ \cos(\omega t) & \cos\left(\omega t - \frac{2\pi}{3}\right) & \cos\left(\omega t + \frac{2\pi}{3}\right) \\ \frac{1}{2} & \frac{1}{2} & \frac{1}{2} \end{bmatrix}$$

Cette matrice représente un changement de base entre une base initiale, et une base d'arrivée tournante, définie par trois vecteurs $\vec{u}_1, \vec{u}_2, \vec{u}_3$ dont les coordonnées dans la base initiale sont respectivement :

$$\vec{u}_1 = \left( \sin(\omega t), \sin\left(\omega t - \frac{2\pi}{3}\right), \sin\left(\omega t + \frac{2\pi}{3}\right) \right)$$

$$\vec{u}_2 = \left( \cos(\omega t), \cos\left(\omega t - \frac{2\pi}{3}\right), \cos\left(\omega t + \frac{2\pi}{3}\right) \right)$$

$$\vec{u}_3 = (1, 1, 1)$$

Autrement dit, $\vec{u}_1$ est colinéaire à $\vec{V}e$ et tourne avec $\vec{V}e$ dans la base de départ, $\vec{u}_2$ est perpendiculaire à $\vec{V}e$ et tourne avec $\vec{V}e$ dans la base de départ, $\vec{u}_3$ est perpendiculaire à $\vec{u}_1$ et à $\vec{u}_2$ et reste fixe dans la base de départ.

La matrice $T^{-1}(\omega t)$ qui, multipliée par $T(\omega t)$ permet de retrouver la matrice identité, est donnée par :

$$T^{-1}(\omega t) = \begin{bmatrix} \sin(\omega t) & \cos(\omega t) & 1 \\ \sin\left(\omega t - \frac{2\pi}{3}\right) & \cos\left(\omega t - \frac{2\pi}{3}\right) & 1 \\ \sin\left(\omega t + \frac{2\pi}{3}\right) & \cos\left(\omega t + \frac{2\pi}{3}\right) & 1 \end{bmatrix}$$

La matrice $T(\omega t)$, et les dérivées première et seconde par rapport au temps de sa matrice inverse $T^{-1}(\omega t)$, possèdent les propriétés remarquables suivantes :

$$T(\omega t) \cdot \frac{d}{dt}\left(T^{-1}(\omega t)\right) = T(\omega t) \cdot s\left(T^{-1}(\omega t)\right) = \begin{bmatrix} 0 & -\omega & 0 \\ \omega & 0 & 0 \\ 0 & 0 & 0 \end{bmatrix}$$

$$T(\omega t) \cdot \frac{d^2}{dt^2}\left(T^{-1}(\omega t)\right) = T(\omega t) \cdot s^2\left(T^{-1}(\omega t)\right) = \begin{bmatrix} -\omega^2 & 0 & 0 \\ 0 & -\omega^2 & 0 \\ 0 & 0 & 0 \end{bmatrix}$$

On utilise par la suite les notations suivantes :

$Ve_{123}$ = ($Ve_1$, $Ve_2$, $Ve_3$) = Vm (sin ($\omega t$), sin ($\omega t-2\pi/3$), sin ($\omega t+2\pi/3$), qui est l'expression de $\overrightarrow{Ve}$ dans la base de départ,

$Ve_{dqo}$ = T($\omega t$) * $Ve_{123}$ =($Ve_d$, Veq, $Ve_o$) = (Vm, 0, 0) qui est l'expression de $\overrightarrow{Ve}$ dans la base tournante définie par les vecteurs $\vec{u}_1, \vec{u}_2, \vec{u}_3$,

$Ie_{123}$=($Ie_1$,$Ie_2$,$Ie_3$)=Im (sin ($\omega t - \varphi$), sin ($\omega t - \varphi -2\pi/3$), sin ($\omega t-\varphi +2\pi/3$)), qui est l'expression de $\overrightarrow{Ie}$ dans la base de départ, $\varphi$ étant le déphasage du courant par rapport à la tension à chaque borne de branchement du dispositif 1 au réseau triphasé,

$Ie_{dqo}$ = T($\omega t$) * $Ie_{123}$ =($Ie_d$, Ieq, $Ie_o$) = Im ($\cos\varphi$., $\sin \varphi$,. 0.), qui est l'expression de $\overrightarrow{Ie}$ dans la base tournante définie par les vecteurs $\vec{u}_1, \vec{u}_2, \vec{u}_3$.

En effet, étant donnée la manière dont est définie la base tournante $\vec{u}_1, \vec{u}_2, \vec{u}_3$, $\vec{Ve}$ est fixe dans la base tournante et le vecteur courant $\vec{Ie}$ est également fixe dans la base tournante et peut s'écrire, si le courant dans chaque phase est déphasé par rapport à la tension de phase d'un angle $\varphi$ :

$Ie_{dqo}$ = ($Ie_d$, Ieq, $Ie_o$) = Im($\cos\varphi$, $\sin\varphi$, 0), autrement dit, réduire le déphasage entre le courant et la tension prélevés sur le réseau revient à annuler la composante suivant $\vec{u}(\vec{Ie})$, c'est-à-dire à annuler la composante Ieq.

On utilise également les notations :

$If_{123}$ = ($If_1$, $If_2$, $If_3$) qui est l'expression de $\vec{If}$ dans la base de départ,
$If_{dqo}$ = T($\omega t$) * $If_{123}$ =($If_d$, Ifq, $If_o$)) qui est l'expression de $\vec{If}$ dans la base tournante définie par les vecteurs $\vec{u}_1, \vec{u}_2, \vec{u}_3$,
$Vf_{123}$ = ($Vf_1$, $Vf_2$, $Vf_3$) qui est l'expression de $\vec{Vf}$ dans la base de départ,
$Vf_{dqo}$ = T($\omega t$) * Vf =($Vf_d$, $Vf_q$, $Vf_o$) qui est l'expression de $\vec{Vf}$ dans la base tournante définie par les vecteurs $\vec{u}_1, \vec{u}_2, \vec{u}_3$.

Ecrire les équations caractéristiques du filtre 2 dans la base tournante, revient à multiplier à gauche par T($\omega t$) les équations (1) et (2) exprimées dans la base de départ. On obtient alors :

$$(L_1 + L_2) \cdot T(\omega t) \cdot s \cdot (Ve_{123} - Vf_{123}) + R \cdot T(\omega t) \cdot (Ve_{123} - Vf_{123})$$

$$= (L_1 \cdot L_2) \cdot T(\omega t) \cdot (s^2 \cdot Ie_{123}) + R \cdot L_2 \cdot T(\omega t) \cdot (s \cdot Ie_{123})$$

et

$$C \cdot T(\omega t) \cdot (s \cdot Vf_{123}) = T(\omega t) \cdot Ie_{123} - T(\omega t) \cdot If_{123} \ ,$$

ce qui peut encore s'écrire en fonction des expressions des différents vecteurs dans la base tournante :

$$(L_1 + L_2) \cdot T(\omega t) \cdot s \cdot \left( T^{-1}(\omega t)\left(Ve_{dqo} - Vf_{dqo}\right)\right) + R \cdot \left(Ve_{dqo} - Vf_{dqo}\right)$$

$$= (L_1 \cdot L_2) \cdot T(\omega t) \cdot \left( s^2 \cdot T^{-1}(\omega t)\left(Ie_{dqo}\right)\right) + R \cdot L_2 \cdot T(\omega t) \cdot s \cdot \left( T^{-1}(\omega t)Ie_{dqo}\right)$$

et

$$C \cdot T(\omega t) \cdot \left( s \cdot T^{-1}(\omega t)\right)\left(Vf_{dqo}\right) = Ie_{dqo} - T(\omega t) \cdot If_{dqo}$$

Les coordonnées suivant le vecteur $\vec{u}_3$ s'annulant, on obtient les équations suivantes concernant les coordonnées suivant les vecteurs $\vec{u}_1$ et $\vec{u}_2$ :

$$\begin{bmatrix} (L_1 + L_2)s + R & -(L_1 + L_2)\omega \\ (L_1 + L_2)\omega & (L_1 + L_2)s + R \end{bmatrix} \begin{pmatrix} Ve_d - Vf_d \\ Ve_q - Vf_q \end{pmatrix}$$

$$= \begin{bmatrix} L_1 L_2 s^2 + RL_2 s - L_1 L_2 \omega^2 & -L_2(2L_1\omega s + R) \\ L_2(2L_1\omega s + R) & L_1 L_2 s^2 + RL_2 s - L_1 L_2 \omega^2 \end{bmatrix} \begin{pmatrix} Ie_d \\ Ie_q \end{pmatrix}$$

$$\text{équation (3)}$$

$$\text{et } \begin{bmatrix} Cs & -C\omega \\ C\omega & Cs \end{bmatrix} \begin{pmatrix} Vf_d \\ Vf_q \end{pmatrix} = \begin{pmatrix} Ie_d - If_d \\ Ie_q - If_q \end{pmatrix} \qquad \text{équation (4)}$$

En éliminant les termes de tension $Vf_d$ et Vfq entre les équations (3) et (4), on aboutit à une équation de la forme suivante reliant Ieq, Ifq et $If_d$ :

$$Ie_q = FA(s)If_q + FB(s)If_d$$

où FA(s) est une fonction de transformation de Ifq qui se déduit des équations (3) et (4), et FB(s) est une fonction de transformation de la fonction $If_d$ qui se déduit également des équations (3) et (4). Il se trouve que pour les pulsations du réseau électrique proche de $\omega = 2\pi \times 50$ ou $\omega = 2\pi \times 60$, et pour les ordres de grandeur des résistances R, Rd, des capacités C et des inductance $L_1$, $L_2$, Ld mentionnés plus haut, la transformation FB(s) appliquée à une valeur de courant I délivre des valeurs négligeables devant les valeurs issues de la transformation FA(s) appliquée au même courant I.

On en déduit que l'on peut utiliser la variable Ifq de courant transitant entre le filtre 2 et l'abaisseur de tension 3, comme variable de contrôle pour asservir la composante Ieq de courant à 0, et annuler ainsi le déphasage entre les courants et les tensions en entrée du dispositif de charge.

Suivant l'approximation :

$$Ie_q = FA(s)If_q \qquad \text{équation (5)}$$

L'équation de la branche contenant la machine électrique 5 permet de proposer une relation reliant Id et $If_d$. En effet elle s'écrit :

$$Rd \cdot Id^2 + Ld/2 \cdot s \cdot \left(Id^2\right) = \vec{If} \cdot \vec{Vf} - I_{batt} \cdot V_{batt}$$

soit encore :

$$Rd \cdot Id^2 + Ld/2 \cdot s \cdot \left(Id^2\right) = If_d\, Vf_d - If_q\, Vf_q - I_{batt} \cdot V_{batt}\,. \quad (\text{équation } 6)$$

En considérant que le produit $I_{batt} \times V_{batt}$ est une perturbation de variation beaucoup plus lente que les valeurs de courants d'entrée que l'on cherche à réguler, et en considérant que la composante Vfq du vecteur des tensions aux bornes des capacités est nulle -car peu différente, du fait des valeurs R, $L_1$, $L_2$ du filtre, de Veq-, on obtient à partir de l'équation (6) une relation reliant directement les variations de $If_d$ et de Id.

On peut donc utiliser la variable de courant $If_d$ comme variable de contrôle pour asservir le courant Id traversant la machine électrique 5, à une valeur de consigne qui sera élaborée de manière à ne pas permettre l'annulation du courant dans la bobine d'inductance Ld.

$If_d$ et Ifq peuvent donc toutes deux être utilisées comme variables de contrôle pour asservir respectivement le courant Id traversant la machine électrique et le courant Ieq transmis entre le filtre et l'abaisseur de tension 3, chacun à une valeur consigne de référence.

Afin de connaître les valeurs de rapport cyclique de hachage $a_1$, $a_2$ et $a_3$ permettant d'obtenir les valeurs $If_d$ et Ifq souhaitées, il suffit d'effectuer un changement de repère à l'aide de la matrice $T^{-1}(\omega t)$ afin de recalculer à partir de $If_d$ et Ifq, les trois coordonnées $If_1$, $If_2$, $If_3$ des courants transmis entre le filtre 2 et l'abaisseur de tension 3. En divisant ces trois valeurs $If_1$, $If_2$ et $If_3$ par la valeur Id de courant mesurée au travers de la machine électrique 5, on obtient par définition les trois valeurs $a_1$, $a_2$ et $a_3$ de rapport cyclique de hachage de l'abaisseur de tension 3. Le pilotage de l'abaisseur de tension 3 à laide de ces trois consignes de rapports cycliques de hachage, permet d'asservir Ieq sur une référence nulle, afin d'annuler le déphasage entre courant et tension en entrée du dispositif, et d'asservir Id, le courant traversant la machine électrique 5, à la valeur de consigne souhaitée $Id^{ref}$.

Si l'on régule Ieq par Ifq pour annuler le déphasage $\varphi$, et que l'on régule Id par $If_d$ pour éviter l'annulation du courant dans la bobine de la machine électrique, il reste alors à satisfaire le troisième objectif de la régulation effectuée par l'unité de régulation 15, c'est à dire asservir le courant entrant dans la batterie $I_{batt}$, à la valeur de consigne $I_{batt}^{ref}$ délivrée par le module de suivi de charge 19. Pour cela, on peut par exemple imposer un rapport cyclique de hachage $a_s$ à l'élévateur de tension 4 de manière à respecter la relation $a_s = I_{batt}^{ref}/Id$. Afin de compenser le décalage temporel entre le moment où les valeurs $I_{batt}$ et Id sont mesurées, et le moment où la variable de pilotage $a_s$ définissant le rapport cyclique de hachage de l'élévateur de tension 4, devient effective, une boucle de contrôle de type « feed forward » peut être utilisée, calculant la variable de pilotage $a_s$ à partir de la somme du courant consigne $I_{batt}^{ref}$, et de l'erreur intégrée entre le courant consigne $I_{batt}^{ref}$ et le courant effectivement mesuré $I_{batt}$ à la borne + de la batterie 13.

Selon une autre variante de réalisation, on peut utiliser les équations (3) et (4) afin d'écrire en éliminant les termes $Vf_d$ et Vfq une relation entre $Ie_d$, Ifq et $If_d$, sous la forme :

$$Ie_d = FE(s)(If_q) + FD(s)(If_d)$$

On constate cette fois-ci, avec les valeurs usuelles de pulsation de réseau et avec les valeurs des résistances R, Rd, des capacités C et des inductance $L_1$, $L_2$, Ld, que le terme $FD(If_d)$ est prépondérant devant le terme FE(Ifq). On peut alors écrire en première approximation :

$$Ie_d = FD(If_d) \qquad\qquad \text{équation } (6)$$

On peut donc, selon cette autre variante de réalisation, utiliser les valeurs de courant Ifq et $If_d$ pour asservir simultanément Ieq et $Ie_d$ à deux valeurs de consigne respectives. Ieq sera comme précédemment asservie à zéro pour annuler le déphasage $\varphi$, et $Ie_d$ sera asservie à une valeur de consigne $Ie_d^{ref}$, élaborée pour obtenir l'intensité de consigne $I_{batt}^{ref}$ en entrée de la borne + de la batterie 13. On effectuera comme précédemment un changement de repère à l'aide de la matrice $T^{-1}(\omega t)$ afin de calculer, à partir des valeurs de contrôle Ifq et $If_d$ souhaitées, les valeurs à appliquer $a_1$, $a_2$, $a_3$ comme consigne de rapport cyclique de hachage, à l'abaisseur de tension 3.

Dans ce second mode de réalisation, on utilise conjointement une boucle de régulation sur Ifq pour réguler Ieq, et une boucle de régulation sur $If_d$ pour réguler le courant arrivant à la batterie. Il reste donc à définir une troisième boucle de régulation permettant d'asservir le courant transitant par la machine électrique 5.

Or, en première approximation, la relation traduisant la dynamique du courant au travers de la machine électrique 5, soit :

$$Rd \cdot Id + Ld \cdot s \cdot Id = \vec{a} \cdot \vec{Vf} - a_s \cdot V_{batt} \qquad\qquad \text{équation } (7)$$

lie directement $a_s$ et le courant Id traversant la machine électrique 5, car :

$\vec{a} \cdot \vec{Vf}$ peut être considérée comme une perturbation dont les valeurs sont déterminées par les deux premières boucles de régulation et

$V_{batt}$ est une valeur relativement stable grâce à la présence du condensateur 12.

Il est donc possible, dans ce second mode de réalisation, de piloter $a_s$ directement à partir de l'erreur entre une valeur de référence Id$^{ref}$, et la valeur mesurée Id traversant la machine électrique 5.

Les valeurs utilisées comme consignes sont la valeur zéro pour Ie$_q$, et deux fonctions intensités de consignes Ie$_q{}^{ref}$ et Id$^{ref}$ élaborées par le module guide de référence 18, respectivement pour Ieq et Id.

Pour déterminer la consigne Ie$_d{}^{ref}$ de courant entrant dans le dispositif, on exprime la conservation de la puissance électrique entre les bornes de connexion réseau triphasé et les bornes de la batterie. On néglige pour cela en première approximation des pertes d'énergie électrique dans le dispositif, liées notamment à la présence de résistances.

La valeur de consigne de courant entrant Ie$_d{}^{ref}$ est alors donnée par la relation :

$$Ie_d{}^{ref} = 2/3 \cdot I_{batt}{}^{ref} \cdot V_{batt} / Vm \quad \text{équation (8)}$$

où

Vm est l'amplitude de la tension d'entrée (tension réseau) ;
$V_{batt}$ est la tension mesurée aux bornes de la batterie 13;
$I_{batt}{}^{ref}$ est la consigne de courant batterie, élaborée par le module de suivi de charge 19.

La consigne Id$^{ref}$ de courant traversant la machine électrique 5, destinée à éviter une annulation de courant dans l'inductance de la machine électrique, peut soit être fixée à une constante arbitraire, soit suivre une fonction quelconque restant constamment supérieure à zéro.

Dans les modes de réalisation décrits on décide d'ajuster *Id$^{ref}$* en fonction des courants de consigne *Ie$_d{}^{ref}$* à l'entrée du dispositif et *I$_{batt}{}^{ref}$* aux bornes de la batterie 13, selon la formule suivante :

$$Id^{ref} = Max\left(Ie_d{}^{ref}, I_{batt}{}^{ref}\right) + A \quad\quad\quad \text{équation (9)}$$

où Ie$_d{}^{ref}$ est donné par la relation ci-dessus, I$_{batt}{}^{ref}$ est la consigne de courant batterie délivrée par le module de suivi de charge 19, et A est une constante arbitraire que l'on peut par exemple fixer à une valeur de 200 ampères.

Le module guide de référence 18 de la figure 1, associé aux modules de contrôle 16 et 17 dont le fonctionnement est détaillé plus bas, calcule donc systématiquement *Ie$_d{}^{ref}$* suivant l'équation (8), et calcule ensuite *Id$^{ref}$* suivant l'équation (9). En fonction des modes de fonctionnement retenus pour chaque module 16 et 17, le module guide 18 envoie une des valeurs *Ie$_d{}^{ref}$* ou *Id$^{ref}$* au module 16, ou au module 17, et envoie éventuellement l'autre des deux valeurs à l'autre module. On ne s'éloigne cependant pas du cadre de l'invention si le module guide de référence ne calcule et ne transmet que l'une des valeurs *Ie$_d{}^{ref}$* ou *Id$^{ref}$*.

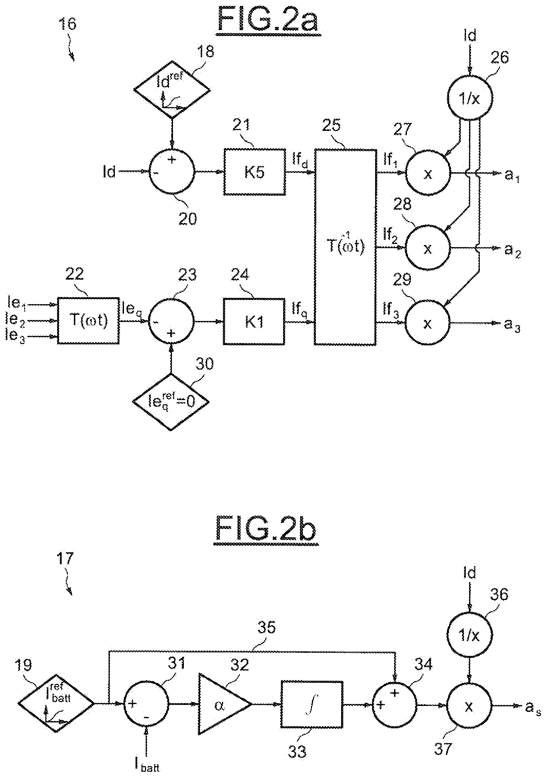

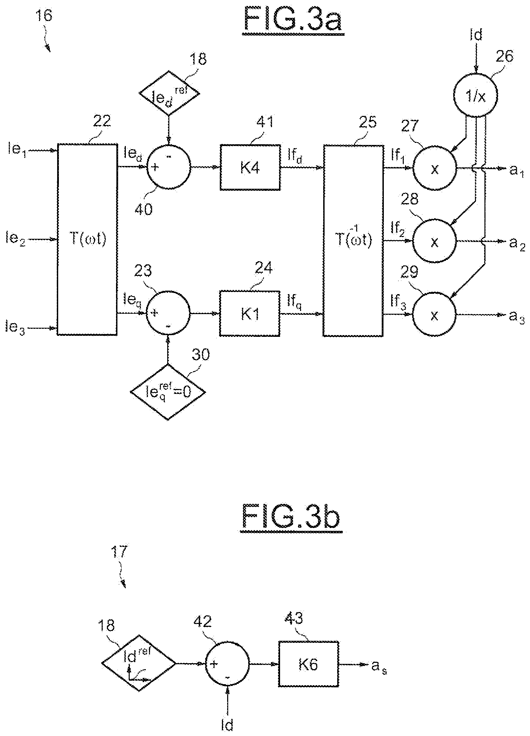

Les figures 2a, 2b et 3a, 3b, illustrent deux modes de régulation retenus pour mettre en oeuvre l'invention à partir des considérations précédentes, en utilisant un dispositif de charge 1 correspondant à la figure 1. On retrouve sur les figures 2a, 2b et 3a, 3b, des références communes à la figure 1, les mêmes éléments étant désigné par les mêmes références.

La figure 2a illustre un mode de fonctionnement possible du module de contrôle 16. Le module de contrôle 16 reçoit sur une première entrée la valeur mesurée Id d'intensité de courant traversant la machine électrique 5. Il envoie cette valeur sur une entrée négative d'un soustracteur 20, qui reçoit sur une entrée positive une valeur de consigne de courant Id$^{ref}$ élaborée par le module guide de référence 18. La différence est envoyée sur un correcteur 21 qui peut être un correcteur de type proportionnel intégral dérivé, dont la fonction de correction est ici notée K5, et dont les termes peuvent être déduits de l'équation (6).

Le résultat de cette correction est interprété comme une composante If$_d$ suivant le vecteur $\vec{u}_1$ la base tournante, parallèle au vecteur tension filtré $\vec{Ve}$ ayant servi à définir le changement de repère, d'un courant de consigne en sortie du filtre 2. Le module de contrôle 16 reçoit sur trois autres entrées des valeurs mesurées Ie$_1$, Ie$_2$, les des courants aux bornes d'entrée B$_1$, B$_2$, B$_3$ du dispositif 1, et utilise ces trois valeurs comme les trois coordonnées d'un vecteur $\vec{Ie}$ intensité de courant, sur lesquelles il applique par un opérateur 22 un changement de repère, pour obtenir une des coordonnées

du vecteur $\vec{Ie}$ dans la base tournante définie par la matrice de changement de base T($\omega$t). La coordonnée retenue Ieq est une coordonnée suivant le vecteur $\vec{u}_2$ perpendiculaire au vecteur tension filtré $\vec{Ve}$ ayant servi à définir le changement de repère. Cette coordonnée Ieq est envoyée sur une entrée négative d'un soustracteur 23 qui reçoit sur une entrée positive une consigne $Ie_q{}^{ref}$ égale à zéro stockée dans une mémoire 30 du module de contrôle 16.

La différence est envoyée sur un correcteur 24 également du type proportionnel intégral dérivé, représenté ici par une fonction de correction K1, dont les termes peuvent se déduire à partir de l'équation (5).

Le résultat du correcteur 24 est interprété comme une intensité de courant Ifq correspondant à une coordonnée suivant le vecteur $\vec{u}_2$ perpendiculaire au vecteur tension filtré $\vec{Ve}$ ayant servi à définir le changement de repère. Les résultats $If_d$ du correcteur 41 et Ifq du correcteur 24 sont ensuite utilisés comme deux composantes dans la base tournante, d'un vecteur $If = (If_d, Ifq, 0)$ représentant un vecteur consigne pour l'intensité du courant sortant du filtre 2. Pour cela, on applique à ce vecteur ($If_d$, Ifq, 0) la matrice de changement de base inverse $T^{-1}(\omega t)$ au moyen d'un opérateur 25, qui délivre trois coordonnées $If_1$, $If_2$, $If_3$ représentant $\vec{If}$ dans la base de départ, c'est-à-dire représentant trois valeurs consigne des courants sortant du filtre 2 et traversant respectivement les branches F1, F2, F3 de la figure 1. Le module de contrôle 16 divise ensuite, à l'aide d'un inverseur de valeur 26 et de trois multiplicateurs 27, 28, 29, chacune des valeurs $If_1$, $If_2$, $If_3$ par la valeur Id de courant traversant la machine électrique 5, et délivre ainsi trois valeurs $a_1$, $a_2$ et $a_3$ qui permettent, suivant des méthodes connues, le pilotage de l'abaisseur de tension 3. Les valeurs $a_1$, $a_2$ et $a_3$ sont par exemple envoyées à un module de pilotage (non représenté) qui impose aux interrupteurs de l'abaisseur de tension 3, les cycles d'ouverture et de fermeture permettant d'obtenir ces rapports cycliques de hachage.

La figure 2b illustre un mode possible de fonctionnement d'un module de contrôle 17 permettant de piloter l'élévateur de tension 4 conjointement au module de contrôle 16 dont le mode de fonctionnement est décrit à la figure 2a. Le module de contrôle 17 reçoit une valeur mesurée $I_{batt}$ sur une de ses entrées, et l'envoie sur l'entrée négative du soustracteur 31, qui reçoit sur son entrée positive la valeur $I_{batt}{}^{ref}$ délivrée par le module de suivi de charge 19. La différence entre les deux termes est envoyée par le soustracteur 31 sur un premier correcteur 32 de type proportionnel, puis sur un second correcteur 33 de type intégrateur. La valeur de consigne de courant $I_{batt}{}^{ref}$ est simultanément envoyée par une boucle de type « feed forward » 35, sur un sommateur 34 qui reçoit sur une deuxième entrée le résultat de l'intégrateur 33.

Sur une troisième entrée, le module de contrôle 17 reçoit la valeur mesurée Id de courant traversant la machine électrique 5, envoie cette valeur sur un opérateur inverseur 36, puis sur un multiplicateur 37 qui reçoit sur sa deuxième le résultat du sommateur 34. Le résultat du multiplicateur 37, qui est donc le courant consigne de batterie augmenté d'un terme d'erreur corrigée, divisé par le courant Id traversant la machine électrique 5, est envoyé en tant que valeur $a_s$ de consigne de rapport cyclique de hachage, à un module de pilotage (non représenté) qui impose suivant des méthodes connues aux interrupteurs de l'élévateur de tension 4, les cycles d'ouverture et de fermeture permettant d'obtenir ce rapport cyclique de hachage.

D'autres types de correction que la correction proportionnelle du correcteur 32 et que la correction proportionnelle de l'intégrateur 33 sont envisageables, la boucle de correction ayant pour but de compenser le décalage temporel entre le moment où les valeurs de pilotage Id et $I_{batt}{}^{ref}$ sont déterminées, et le moment où le rapport cyclique de hachage correspondant $a_s$ est appliqué.

Les modes de fonctionnement décrits aux figures 2a et 2b sont complémentaires : le mode de fonctionnement décrit à la figure 2a permet, en pilotant l'abaisseur de tension 3, d'annuler le déphasage entre le courant et la tension prélevés sur le réseau, et permet également d'obtenir une intensité de courant Id traversant la machine électrique, qui est non nul, et qui est compatible avec le courant $I_{batt}{}^{ref}$ que l'on cherche au final à obtenir à l'entrée de la batterie 13.

Le mode de fonctionnement du module de contrôle 17 décrit à la figure 2b permet alors, en asservissant $I_{batt}$ sur $I_{batt}{}^{ref}$, de tirer parti du courant Id traversant la machine électrique, et régulé par le module 16, de manière à obtenir le courant souhaité $I_{batt}{}^{ref}$ à l'entrée de la batterie 13.

La figure 3a illustre un autre mode possible de fonctionnement du module de contrôle 16, permettant de piloter l'abaisseur de tension 3 de la figure 1. Comme dans le mode de fonctionnement de la figure 2a, les trois valeurs $Ie_1$, $Ie_2$, $Ie_3$ constituant les coordonnées du vecteur $\vec{Ie}$ d'intensités de courant entrant par les bornes $B_1$, $B_2$, $B_3$ du dispositif 1, sont transformées par un opérateur 22 qui les multiplie par la matrice de changement de repère T($\omega$t).

L'opérateur 22 délivre cette fois deux coordonnées Ieq et $Ie_d$ du courant entrant par les bornes du circuit triphasé, qui sont les coordonnées du vecteur $\vec{Ie}$ dans le plan de rotation défini par les vecteurs $\vec{u}_1, \vec{u}_2$, du vecteur filtré de tension à l'entrée du dispositif. La coordonnée Ieq, qui est la coordonnée perpendiculaire au vecteur filtré de tension est, comme dans le mode de régulation de la figure 2a, envoyée sur un soustracteur 23, qui lui soustrait une valeur de consigne $Ie_q{}^{ref}$ stockée dans une mémoire 30 et égale à zéro, et envoie la différence sur un correcteur 24 représenté par la fonction de correction K1, qui peut être la même que celle de la figure 3a.

Le correcteur 24 délivre une valeur Ifq qui est utilisée par la suite comme une composante d'un vecteur $\vec{If}$

consigne de courant à l'entrée de l'abaisseur de tension 3. Dans le mode de régulation de la figure 3a, l'opérateur 22 envoie la seconde coordonnée $Ie_d$ de courant entrant dans le dispositif, qui est la coordonnée qui est la coordonnée suivant le *vecteur $\vec{u}_1$,* parallèle au vecteur filtré de tension $\vec{Ve}$, sur un soustracteur 40 qui lui soustrait une valeur de consigne $Ie_d{}^{ref}$ élaborée par le module guide de référence 18 de la figure 1.

La différence est envoyée sur un correcteur 41 représenté par une fonction de correction K4 qui peut être de type proportionnel intégral dérivé et dont les termes peuvent se déduire de l'équation (6).

Le correcteur 41 délivre une valeur $If_d$ qui est interprétée comme une valeur consigne de la coordonnée parallèle au vecteur $\vec{Ve}$ de tensions filtrées en entrée du dispositif, du vecteur $\vec{If}$ définissant les trois courants entrant par les bornes de l'abaisseur de tension 3. Ifq est interprété comme la coordonnée suivant le second vecteur de base $\vec{u}_2$ de la base tournante, perpendiculaire au vecteur $\vec{Ve}$ de tensions filtrées en entrée du dispositif, du vecteur $\vec{If}$ des intensités entrantes dans l'abaisseur de tension 3. Les deux coordonnées $If_d$ et Ifq sont respectivement envoyées par les correcteurs 41 et 24 sur un opérateur 25 qui les multiplie par la matrice inverse de changement de base $T^{-1}(\omega t)$. L'opérateur 25 délivre trois coordonnées $If_1$, $If_2$ et $If_3$ de $\vec{If}$ dans la base de départ, traduisant les valeurs d'intensités de courant consignes que l'on souhaite obtenir respectivement dans les branches $F_1$, $F_2$, $F_3$ d'entrée de l'abaisseur de tension 3.

Comme dans le mode de régulation de la figure 2a, les trois valeurs de consigne $If_1$, $If_2$, $If_3$ sont ensuite divisées au moyen d'un opérateur inverseur 26 et de trois opérateurs multiplicateurs 27, 28 et 29, par la valeur mesurée Id de courant traversant la machine électrique 5. Le module ce contrôle 16 délivre alors trois valeurs de consigne $a_1$, $a_2$, $a_3$, utilisées par un module de pilotage (non représenté) comme consignes de rapport cyclique de hachage pour piloter l'abaisseur de tension 3.

La figure 3b illustre un mode de régulation par le module 17, qui est complémentaire au mode de régulation par le module 16 décrit à la figure 3a. Le module de contrôle 17 reçoit ici sur une première entrée, la valeur mesurée Id du courant traversant la machine électrique 5, l'envoie sur l'entrée négative d'un soustracteur 42 qui reçoit sur une entrée positive une valeur de consigne $Id^{ref}$ élaborée par le module guide de référence 18.

La différence entre la valeur mesurée Id et la valeur de consigne $Id^{ref}$ est envoyée sur un correcteur 43, par exemple de type proportionnel intégral, et représenté par une fonction de correction K6, dont les termes peuvent se déduire de l'équation (7). Le correcteur 43 délivre une valeur $a_s$ que le module de contrôle 17 envoie sur un module de pilotage (non représenté) pour définir les cycles d'ouverture et de fermeture des interrupteurs faisant partie de l'élévateur de tension 4.

L'objet de l'invention ne se limite pas aux modes de réalisation décrits, et peut se décliner en de nombreuses variantes, notamment en ce qui concerne la forme du vecteur modélisé $\vec{Ve}$ des tensions entrantes, et la matrice de changement de base qui en découle.

On peut utiliser une architecture de filtre différente en entrée de l'abaisseur de tension 3, les termes des équation (3) et (4) étant alors modifiés, mais le changement de repère restant possible, avec les mêmes avantages que décrit ci-dessus.

On peut envisager des commandes multivariables où trois boucles de régulation, ou plus, seraient interdépendantes pour délivrer conjointement les quatre valeurs consignes de rapports cycliques de hachage $a_1$, $a_2$, $a_3$, $a_s$.

L'architecture du dispositif 1 peut varier, à condition de conserver la succession filtre-abaisseur de tension-bobine d'induction-élévateur de tension-batterie. On notera en particulier que les branches $F_1$, $F_2$, $F_3$ peuvent être réduites aux points de connexion $D_1$, $D_2$, $D_3$.

Le dispositif de charge suivant l'invention permet de concilier à chaque instant les besoins d'alimentation de la batterie, et les exigences du fournisseur de courant triphasé en terme de puissance réactive et d'harmoniques du courant délivré.

Liste des références

| | |
|---|---|
| 1 | Dispositif de charge |
| 2 | Filtre |
| 3 | Abaisseur de tension |
| 4 | Elévateur de tension |
| 5 | Machine électrique |
| 6, 7, 8 | Branches parallèles de l'abaisseur de tension 3 |
| 9 | Diode |
| 10 | Première borne de branchement de l'élévateur de tension 4 |
| 11 | Deuxième borne de branchement de l'élévateur de tension 4 |

| | |
|---|---|
| 12 | Condensateur |
| 13 | Batterie |
| 14 | Module de normalisation |
| 15 | Unité de régulation |
| 16, 17 | Modules de contrôle |
| 18 | Module guide de référence |
| 19 | Module de suivi de charge |
| 20 | Soustracteur |
| 21 | Correcteur |
| 22 | Opérateur de changement de repère (=opérateur de changement de base) |
| 23 | Soustracteur |
| 24 | Correcteur |
| 25 | Opérateur de changement de repère (=opérateur de changement de base) inverse de l'opérateur 22 |
| 26 | Inverseur |
| 27, 28, 29 | Multiplicateurs |
| 30 | Mémoire |
| 31 | Soustracteur |
| 32 | Correcteur |
| 33 | Correcteur intégrateur |
| 34 | Sommateur |
| 35 | Boucle « feed forward » |
| 36 | Inverseur |
| 37 | Multiplicateur |
| 40 | Soustracteur |
| 41 | Correcteur |
| 42 | Soustracteur |
| 43 | Correcteur |
| $\alpha$ | Facteur de correction du correcteur 32 |
| $a_1$, $a_2$, $a_3$ | Rapports cycliques de hachage de l'abaisseur de tension 3 définis par $a_1 = If_1/Id$, $a_2 = If_2/Id$, $a_3 = If_3/Id$ |
| $a_s$ | Rapport cyclique de hachage de l'élévateur de tension 4 défini par $a_s = I_{batt}/Id$ |
| $B_1$, $B_2$, $B_3$ | Bornes de branchement du dispositif 1 aux phases du réseau triphasé |
| C | Capacités du filtre 2, de valeur C |
| $D_1$, $D_2$, $D_3$ | Points de connexion du filtre 2 aux entrées de l'abaisseur de tension 3 |
| $F_1$, $F_2$, $F_3$ | Branches ou points de connexion entre les entrées de la l'abaisseur de tension 3, et le milieu (point entre deux interrupteurs) de chaque branche 6, 7, 8 de l'abaisseur de tension 3 |
| $L_1$ | Première série d'inductances du filtre 2, de valeur $L_1$ |
| $L_2$ | Deuxième série d'inductances du filtre 2, de valeur $L_2$ |
| R | Résistances du filtre 2, de valeur R |
| Rd | Résistance équivalente des bobinages de la machine électrique 5 |
| Ld | Inductance équivalente des bobinages de la machine électrique 5 |
| $Ie_1$, $Ie_2$, $Ie_3$ | Valeurs mesurées de courant entrant par les bornes $B_1$, $B_2$, $B_3$ dans le dispositif de charge |
| $If_1$, $If_2$, $If_3$ | Courants entrant par les branches $F_1$, $F_2$, $F_3$ dans l'abaisseur de tension 3 à partir du filtre 2 |
| Id | Courant mesuré traversant la machine électrique 5 |
| $I_{batt}$ | Courant mesuré entrant par la borne « + » de la batterie 13 |
| $I_{batt}^{ref}$ | Consigne d'intensité de courant batterie émise par le module de suivi de charge 19 |
| $Ie_d$ | Projection du vecteur $\vec{Ie} = (Ie_1, Ie_2, Ie_3)$ exprimé dans le base de départ sur le premier vecteur $\vec{u}_1$ de la base tournante |
| $If_d$ | Projection du vecteur $If$ égal à ($If_1$, $If_2$, $If_3$) exprimé dans le base de départ sur le premier vecteur $\vec{u}_1$ de la base tournante |
| K1, K4, K5, K6 | Fonctions de correction des correcteurs 24, 21, 41 et 43 |
| $T(\omega t)$ | Matrice de changement de base entre un repère initial où les tensions aux bornes d'entrée du dispositif définissent un vecteur $\vec{Ve} = (Ve_1, Ve_2, Ve_3)$, et un repère défini par une base tournante orthogonale dont un premier vecteur de base $\vec{u}_1$ est colinéaire au vecteur $\vec{Ve}$, et un troisième vecteur de base est fixe par rapport à la base de départ. |
| $T^{-1}(\omega t)$ | Matrice inverse de changement de base, entre le repère défini par la base tournante et le repère initial. |
| $VE_a$, $VE_b$, $VE_c$ | Tension mesurée entre la masse et chacune des bornes de branchement du dispositif de charge au |

réseau triphasé

Ve$_1$, Ve$_2$, Ve$_3$     Valeurs de tension filtrées par le module de normalisation 14 à partir des valeurs de tension mesurées VE$_a$, VE$_b$, VE$_c$, ré-ordonnées de 1 à 3 pour obtenir un déphasage prédéfini entre le premier, le second et le troisième terme filtré, la numérotation de 1 à 3 étant répercutée sur la numérotation des bornes B$_1$, B$_2$, B$_3$, D$_1$, D$_2$, D$_3$, et des branches F$_1$, F$_2$, F$_3$ du dispositif de charge, et sur la désignation des valeurs mesurées au niveau de ces bornes ou de ces branches

**Revendications**

1. Dispositif (1) de charge rapide pour batterie (13), notamment pour batterie de véhicule automobile, comprenant un étage de filtrage (2) de type résistif-inductif-capacitif destiné à être raccordé à un réseau triphasé, un étage (3) abaisseur de tension, et un étage (4) élévateur de tension, destiné à être raccordé à la batterie (13), ainsi qu'une bobine d'induction (Ld) interposée entre l'étage abaisseur (3) et l'étage élévateur (4) de tension, le dispositif (1) comprenant également une unité de régulation (15) apte à imposer des rapports cycliques de hachage (a$_1$, a$_2$, a$_3$, a$_s$) à l'étage abaisseur de tension (3) et à l'étage élévateur de tension (4),
des moyens de mesure des intensités (Ie$_1$, Ie$_2$, Ie$_3$) de courants entrants dans le dispositif par les phases (B$_1$, B$_2$, B$_3$) du réseau triphasé,
des moyens de mesure de l'intensité du courant (Id) traversant la bobine (Ld),
l'unité de régulation (15) comprenant au moins deux boucles de régulation (16, 17) utilisant les valeurs mesurées d'intensité (Ie$_1$, Ie$_2$, Ie$_3$, Id), pour délivrer trois valeurs (a$_1$, a$_2$, a$_3$) utilisées comme consignes de rapports de hachage cyclique de l'étage (3) abaisseur de tension, et pour compenser le déphasage induit par l'étage de filtrage (12) entre les courants (Ie$_1$, Ie$_2$, Ie$_3$) et les tensions (Ve$_1$, Ve$_2$, Ve$_3$) prélevés sur chaque phase (B$_1$, B$_2$, B$_3$) du réseau triphasé, et pour maintenir la valeur de l'amplitude de courant traversant la bobine (Ld) au dessus d'un seuil prédéfini non nul.

2. Dispositif de charge rapide suivant la revendication 1, dans lequel l'unité de régulation (15) comprend en outre des moyens (16, 17) pour asservir le courant (I$_{batt}$) entrant dans la batterie (13) à une valeur consigne (I$_{batt}$$^{ref}$) de courant batterie.

3. Dispositif de charge rapide suivant l'une quelconque des revendications précédentes, dans lequel l'unité de régulation (15) comprend une troisième boucle de régulation (17), délivrant une valeur (a$_s$) utilisée comme consigne de rapport cyclique de hachage de l'étage (4) élévateur de tension.

4. Dispositif de charge rapide suivant l'une quelconque des revendications précédentes, dans lequel l'unité de régulation (15) comprend des moyens pour déterminer trois tensions d'entrée sinusoïdales (Ve$_1$, Ve$_2$, Ve$_3$) aux points de connexion (B$_1$, B$_2$, B$_3$) du dispositif (1) au réseau triphasé, et dans lequel au moins une première boucle de régulation fait intervenir la pulsation ($\omega$) des tensions d'entrées (Ve$_1$, Ve$_2$, Ve$_3$).

5. Dispositif de charge rapide suivant la revendication 4, dans lequel la première boucle de régulation est configurée pour asservir à zéro une composante (Ie$_q$) obtenue comme une combinaison linéaire des valeurs (Ie$_1$, Ie$_2$, Ie$_3$) des intensités de courants d'entrée, les coefficients de la combinaison linéaire étant des fonctions trigonométriques de $\omega t$, où t est une mesure du temps.

6. Dispositif de charge rapide suivant la revendication 5, dans lequel l'unité de régulation (15) comprend un opérateur (25) apte à effectuer trois combinaisons linéaires de deux valeurs (Ie$_q$, Ie$_d$) issues de deux des boucles de régulation, les coefficients de chacune des trois combinaisons linéaires étant des fonctions trigonométriques de $\omega t$.

7. Procédé de régulation d'un dispositif (1) de charge rapide pour batterie (13) à partir d'un courant triphasé, comprenant une étape de mesure des intensités (Ie1, Ie2, Ie3) de courants entrants dans le dispositif par les phases (B1, B2, B3) du réseau triphasé,
une étape de mesure de l'intensité du courant (Id) traversant la bobine (Ld),
une étape de détermination de trois valeurs (a$_1$, a$_2$, a$_3$) utilisées comme consignes de rapports de hachage cyclique d'un étage (3) abaisseur de tension par au moins deux boucles de régulation (16.17) fonction des valeurs mesurées d'intensité (Ie$_1$, Ie$_2$, Ie$_3$, Id) afin de compenser un déphasage induit par un étage de filtrage (2) de type résistif-capacitif-inductif, entre les intensités de courants d'entrée (Ie$_1$, Ie$_2$, Ie$_3$) du dispositif et les tensions d'entrée (Ve$_1$, Ve$_2$, Ve$_3$) du dispositif (1),
une étape de pilotage d'un étage abaisseur de tension avec les rapports cycliques de hachage (a$_1$, a$_2$, a$_3$).

8.  Procédé de régulation d'un dispositif (1) de charge rapide suivant la revendication 7, dans lequel on filtre les tensions d'entrée ($VE_c$, $VE_b$, $VE_a$) du dispositif pour pouvoir les modéliser par trois composantes ($Ve_1$, $Ve_2$, $Ve_3$) d'un vecteur ($\vec{Ve}$) tournant dans un plan ($\vec{u}_1$,$\vec{u}_2$) avec une pulsation $\omega$, puis on applique une boucle de régulation pour annuler la composante dans ce plan ($\vec{u}_1$,$\vec{u}_2$), perpendiculaire au vecteur modélisé ($\vec{Ve}$) des tensions d'entrée, du vecteur $\vec{Ie}$ ayant pour composantes trois intensités ($Ie_1$, $Ie_2$, $Ie_3$) mesurées d'entrée du dispositif (1).

9.  Procédé de régulation d'un dispositif (1) de charge rapide suivant la revendication 7, dans lequel on asservit à zéro une combinaison linéaire de trois courants ($Ie_1$, $Ie_2$, $Ie_3$) mesurés en entrée du dispositif, les coefficients de la combinaison linéaire étant des fonctions trigonométriques de $\omega t$, où $\omega$ est une fréquence de pulsation des tensions d'entrées du dispositif, et t est une mesure du temps.

**Patentansprüche**

1.  Vorrichtung (1) zur Schnellaufladung einer Batterie (13), insbesondere einer Kraftfahrzeugbatterie, die eine Filterstufe (2) vom resistiv-induktiv-kapazitiven Typ, die dazu bestimmt ist, an ein Dreiphasennetz angeschlossen zu werden, eine Spannungsminderungsstufe (3) und eine Spannungserhöhungsstufe (4), die dazu bestimmt ist, an die Batterie (13) angeschlossen zu werden, sowie eine Induktionsspule (Ld), die zwischen die Spannungsminderungsstufe (3) und die Spannungserhöhungsstufe (4) geschaltet ist, umfasst, wobei die Vorrichtung (1) außerdem umfasst: eine Regelungseinheit (15), die der Spannungsminderungsstufe (3) und der Spannungserhöhungsstufe (4) zyklische Zerhackungsverhältnisse ($a_1$, $a_2$, $a_3$, $a_s$) auferlegen kann,
    Mittel zur Messung der Stärken ($Ie_1$, $Ie_2$, $Ie_3$) von über die Phasen ($B_1$, $B_2$, $B_3$) des Dreiphasennetzes in die Vorrichtung fließenden Strömen,
    Mittel zur Messung der Stärke des durch die Spule (Ld) fließenden Stroms (Id),
    wobei die Regelungseinheit (15) wenigstens zwei Regelschleifen (16, 17) umfasst, welche die gemessenen Stromstärkewerte ($Ie_1$, $Ie_2$, $Ie_3$, Id) verwenden, um drei Werte ($a_1$, $a_2$, $a_3$) zu liefern, die als Sollwerte für zyklische Zerhackungsverhältnisse der Spannungsminderungsstufe (3) verwendet werden, und um die Phasenverschiebung zu kompensieren, die durch die Filterstufe (12) zwischen den Strömen ($Ie_1$, $Ie_2$, $Ie_3$) und den Spannungen ($Ve_1$, $Ve_2$, $Ve_3$) hervorgerufen wird, die an den einzelnen Phasen ($B_1$, $B_2$, $B_3$) des Dreiphasennetzes abgenommen werden, und um den Wert der Amplitude des durch die Spule (Ld) fließenden Stroms über einem vordefinierten, von null verschiedenen Schwellenwert zu halten.

2.  Vorrichtung zur Schnellaufladung nach Anspruch 1, wobei die Regelungseinheit (15) außerdem Mittel (16, 17) umfasst, um den in die Batterie (13) fließenden Strom ($I_{batt}$) auf einen Sollwert ($I_{batt}^{ref}$) des Batteriestroms zu regeln.

3.  Vorrichtung zur Schnellaufladung nach einem der vorhergehenden Ansprüche, wobei die Regelungseinheit (15) eine dritte Regelschleife (17) umfasst, die einen Wert ($a_s$) liefert, der als Sollwert für das zyklische Zerhackungsverhältnis der Spannungserhöhungsstufe (4) verwendet wird.

4.  Vorrichtung zur Schnellaufladung nach einem der vorhergehenden Ansprüche, wobei die Regelungseinheit (15) Mittel zum Bestimmen von drei sinusförmigen Eingangsspannungen ($Ve_1$, $Ve_2$, $Ve_3$) an den Verbindungspunkten ($B_1$, $B_2$, $B_3$) der Vorrichtung (1) mit dem Dreiphasennetz umfasst, und wobei wenigstens eine erste Regelschleife die Winkelfrequenz ($\omega$) der Eingangsspannungen ($Ve_1$, $Ve_2$, $Ve_3$) betrifft.

5.  Vorrichtung zur Schnellaufladung nach Anspruch 4, wobei die erste Regelschleife dafür ausgelegt ist, eine Komponente ($Ie_q$) auf null zu regeln, die als eine Linearkombination der Werte ($Ie_1$, $Ie_2$, $Ie_3$) der Eingangsstromstärken erhalten wird, wobei die Koeffizienten der Linearkombination trigonometrische Funktionen von $\omega t$ sind, wobei t ein Maß der Zeit ist.

6.  Vorrichtung zur Schnellaufladung nach Anspruch 5, wobei die Regelungseinheit (15) einen Operator (25) umfasst, der drei Linearkombinationen von zwei Werten ($Ie_q$, $Ie_d$), die von zwei Regelschleifen stammen, bewirken kann, wobei die Koeffizienten jeder der drei Linearkombinationen trigonometrische Funktionen von $\omega t$ sind.

7.  Verfahren zur Regelung einer Vorrichtung (1) zur Schnellaufladung einer Batterie (13) ausgehend von einem Dreiphasenstrom, umfassend:

    einen Schritt der Messung der Stärken (Ie1, Ie2, Ie3) von über die Phasen (B1, B2, B3) des Dreiphasennetzes in die Vorrichtung fließenden Strömen,
einen Schritt der Messung der Stärke des durch die Spule (Ld) fließenden Stroms (Id),
einen Schritt der Bestimmung von drei Werten ($a_1$, $a_2$, $a_3$), die als Sollwerte für zyklische Zerhackungsverhältnisse einer Spannungsminderungsstufe (3) von wenigstens zwei Regelschleifen (16, 17) verwendet werden und von gemessenen Stromstärkewerten ($Ie_1$, $Ie_2$, $Ie_3$, Id) abhängig sind, um eine Phasenverschiebung zu kompensieren, die durch eine Filterstufe (2) vom resistiv-induktiv-kapazitiven Typ zwischen den Eingangsstromstärken ($Ie_1$, $Ie_2$, $Ie_3$) der Vorrichtung und den Eingangsspannungen ($Ve_1$, $Ve_2$, $Ve_3$) der Vorrichtung (1) hervorgerufen wird,
einen Schritt der Vorsteuerung einer Spannungsminderungsstufe mit den zyklischen Zerhackungsverhältnissen ($a_1$, $a_2$, $a_3$).

8. Verfahren zur Regelung einer Vorrichtung (1) zur Schnellaufladung nach Anspruch 7, wobei die Eingangsspannungen ($VE_c$, $VE_b$, $VE_a$) der Vorrichtung gefiltert werden, um sie durch drei Komponenten ($Ve_1$, $Ve_2$, $Ve_3$) eines Vektors ($\vec{Ve}$) modellieren zu können, der in einer Ebene ($\vec{u}_1, \vec{u}_2$) mit einer Winkelfrequenz $\omega$ rotiert, und anschließend eine Regelschleife angewendet wird, um die Komponente des Vektors $\vec{Ie}$, dessen Komponenten drei gemessene Eingangsstromstärken ($Ie_1$, $Ie_2$, $Ie_3$) der Vorrichtung (1) sind, in dieser Ebene ($\vec{u}_1, \vec{u}_2$) zu annullieren, die zu dem modellierten Vektor ($\vec{Ve}$) der Eingangsspannungen senkrecht ist.

9. Verfahren zur Regelung einer Vorrichtung (1) zur Schnellaufladung nach Anspruch 7, wobei eine Linearkombination von drei am Eingang der Vorrichtung gemessenen Strömen ($Ie_1$, $Ie_2$, $Ie_3$) auf null geregelt wird, wobei die Koeffizienten der Linearkombination trigonometrische Funktionen von $\omega t$ sind, wobei $\omega$ weine Winkelfrequenz der Eingangsspannungen der Vorrichtung ist und t ein Maß der Zeit ist.

## Claims

1. Rapid charging device (1) for a battery (13), notably for an automobile battery, comprising a filtering stage (2) of resistive-inductive-capacitive type intended to be connected to a three-phase network, a buck stage (3), and a boost stage (4), intended to be connected to the battery (13), as well as an induction winding (Ld) interposed between the buck stage (3) and the boost stage (4), the device (1) also comprising a regulating unit (15) capable of imposing chopping duty cycles ($a_1$, $a_2$, $a_3$, $a_s$) on the buck stage (3) and on the boost stage (4),
means for measuring the intensities ($Ie_1$, $Ie_2$, $Ie_3$) of currents entering into the device via the phases ($B_1$, $B_2$, $B_3$) of the three-phase network,
means for measuring the intensity of the current (Id) passing through the winding (Ld),
the regulating unit (15) comprising at least two regulating loops (16, 17) using the measured intensity values ($Ie_1$, $Ie_2$, $Ie_3$, Id) to deliver three values ($a_1$, $a_2$, $a_3$) used as buck stage (3) chopping duty cycle setpoints, and to compensate the phase shift induced by the filtering stage (12) between the currents ($Ie_1$, $Ie_2$, $Ie_3$) and the voltages ($Ve_1$, $Ve_2$, $Ve_3$) taken from each phase ($B_1$, $B_2$, $B_3$) of the three-phase network, and to maintain the value of the current amplitude passing through the winding (Ld) above a non-zero predefined threshold.

2. Rapid charging device according to Claim 1, in which the regulating unit (15) also comprises means (16, 17) to slave the current ($I_{batt}$) entering into the battery (13) to a setpoint battery current value ($I_{batt}^{ref}$).

3. Rapid charging device according to either one of the preceding claims, in which the regulating unit (15) comprises a third regulating loop (17), delivering a value ($a_s$) used as boost stage (4) chopping duty cycle setpoint.

4. Rapid charging device according to any one of the preceding claims, in which the regulating unit (15) comprises means for determining three sinusoidal input voltages ($Ve_1$, $Ve_2$, $Ve_3$) at the points of connection ($B_1$, $B_2$, $B_3$) of the device (1) to the three-phase network, and in which at least a first regulating loop involves the pulsing ($\omega$) of the input voltages ($Ve_1$, $Ve_2$, $Ve_3$).

5. Rapid charging device according to Claim 4, in which the first regulating loop is configured to slave to zero a component ($Ie_q$) obtained as a linear combination of the values ($Ie_1$, $Ie_2$, $Ie_3$) of the input current intensities, the coefficients of the linear combination being trigonometric functions of $\omega t$, in which t is a measurement of time.

6. Rapid charging device according to Claim 5, in which the regulating unit (15) comprises an operator (25) capable of performing three linear combinations of two values ($Ie_q$, $Ie_d$) derived from two of the regulating loops, the coefficients of each of the three linear combinations being trigonometric functions of $\omega t$.

7. Method for regulating a rapid charging device (1) for a battery (13) from a three-phase current, comprising a step of measuring the intensities ($Ie_1$, $Ie_2$, $Ie_3$) of currents entering into the device via the phases ($B_1$, $B_2$, $B_3$) of the three-phase network, a step of measuring the intensity of the current (Id) passing through the coil (Ld), a step of determining three values ($a_1$, $a_2$, $a_3$) used as chopping duty cycle setpoints of a buck stage (3) by at least two regulation loops (16, 17) as a function of the measured intensity values ($Ie_1$, $Ie_2$, $Ie_3$, Id) in order to compensate a phase shift induced by a filtering stage (2) of resistive-capacitive-inductive type, between the input current intensities ($Ie_1$, $Ie_2$, $Ie_3$) of the device and the input voltages ($Ve_1$, $Ve_2$, $Ve_3$) of the device (1), a step of controlling a buck stage with the chopping duty cycles ($a_1$, $a_2$, $a_3$).

8. Method for regulating a rapid charging device (1) according to Claim 7, in which the input voltages ($VE_c$, $VE_b$, $VE_a$) of the device are filtered to be able to model them by three components ($Ve_1$, $Ve_2$, $Ve_3$) of a vector ($\vec{Ve}$) rotating in a plane ($\vec{u}_1, \vec{u}_2$) with a pulsing $\omega$ then a regulating loop is applied to cancel the component in this plane ($\vec{u}_1, \vec{u}_2$), at right angles to the modeled vector ($\vec{Ve}$) of the input voltages, of the vector $\vec{Ie}$ having for components three measured input intensities ($Ie_1$, $Ie_2$, $Ie_3$) of the device (1).

9. Method for regulating a rapid charging device (1) according to Claim 7, in which a linear combination of three currents ($Ie_1$, $Ie_2$, $Ie_3$) measured at the input of the device are slaved to zero, the coefficients of the linear combination being trigonometric functions of $\omega t$, in which $\omega$ is a pulsing frequency of the input voltages of the device, and t is a measurement of time.

FIG.1

EP 2 613 960 B1

## FIG.2a

## FIG.2b

## FIG.3a

## FIG.3b

**EP 2 613 960 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006072352 A

- FR 2943188